# EUROPÄISCHE PATENTSCHRIFT

(11) **EP 2 130 768 B1**
(45) Veröffentlichungstag und Bekanntmachung des Hinweises auf die Patenterteilung: **05.05.2010**
(21) Anmeldenummer: 09006252.2
(22) Anmeldetag: 08.05.2009
(51) Int. Cl.: B64G 1/40, F17C 13/00, F17C 13/08

(54) **Tank zur Lagerung kryogener Flüssigkeiten und lagerfähiger Treibstoffe**
Tank for storing cryogenic fluids and storable fuels
Réservoir de stockage de liquides cryogènes et carburants pouvant être stockés

(30) Priorität: 03.06.2008 DE 102008026320
(43) Veröffentlichungstag der Anmeldung: 09.12.2009
(73) Patentinhaber: Astrium GmbH, 85521 Ottobrunn (DE)
(72) Erfinder: Behruzi, Kei Philipp, Dr., 28209 Bremen (DE); Netter, Gaston Dr., 27729 Vollersode (DE)
(74) Vertreter: Hansmann, Dierk

(56) Entgegenhaltungen:
- DE-A1- 2 751 167
- DE-A1- 3 315 300
- DE-A1- 3 612 002
- DE-C1- 3 826 919
- DE-C1- 19 623 017
- US-A- 4 848 987
- US-A- 5 901 557

## Beschreibung

Die Erfindung betrifft einen Tank zur Lagerung kryogener Flüssigkeiten oder lagerfähiger flüssiger Treibstoffe zum Betrieb von Raumflugkörpern, mit einem als Fördermedium dienenden Treibgas sowie mit wenigstens einer Gaszuführ- und Entnahmevorrichtung in Form eines wiederfüllbaren Reservoirs, bei der mittels Sieben unter Ausnutzung der Oberflächenspannung eine Separation des Treibgases von der Flüssigkeit herbeigeführt ist.

Bei Tanks dieser Art dienen Treibgase zur Förderung der darin enthaltenen flüssigen Komponenten, d. h., des Treibstoffs auf der einen und eines Oxidators auf der anderen Seite, in die Brenn- bzw. Reaktionskammer. Als Treibgase werden üblicherweise Inertgase wie Helium (He) oder Stickstoff (N₂) eingesetzt, die unter Druck in den Treibstoff- bzw. den Oxidatorbehälter gepreßt werden und die dadurch den Treibstoff und den Oxidator in das zum jeweiligen Triebwerk führende Rohrleitungssystem pressen. Wichtig ist dabei eine vollständige und sichere Trennung zwischen dem als Fördermedium dienenden Treibgas und den in das Triebwerk gelangenden flüssigen Komponenten, d. h., dem Treibstoff bzw. dem Oxidator, da letztere unbedingt frei von Fremdgaseinlagerungen sein müssen.

Bei kryogenen Flüssigkeiten, insbesondere bei flüssigem Wasserstoff, führt die Erwärmung des Treibstoffs aufgrund von Verdampfungseffekten über der Zeit im allgemeinen zu einem Druckanstieg im Tank. Der entstehende Überdruck muß zur Wahrung der strukturellen Integrität des Tanks bei Erreichen eines oberen Grenzwertes aus dem Tank abgeführt werden. Diese Problematik tritt insbesondere bei kryogenen Raumfahrtsystemen auf, die über längere Zeit im Orbit in schwerelosem Zustand operieren müssen. Das im Tank befindliche Gas wird dabei häufig auch zur Lageregelung des Raumflugkörpers verwendet. Dies ist eine im Vergleich zu einem zusätzlichen Antriebssystem kostengünstige und für die Lageregelung ausreichende Variante der Schuberzeugung. Das kalte Gas wird dabei aus dem Treibstofftank über eine oder mehrere Schubdüsen gerichtet in das Vakuum entlassen.

Wird bei diesem Vorgang ein Gas-Flüssigkeitsgemisch aus dem Tank in das Vakuum entlassen, so führen die unterschiedlichen Dichten von Flüssigkeit und Gas, je nach Mischungsverhältnis, zu einem nicht-konstanten Schubprofil und der Regelalgorithmus des Raumfahrzeuges muß dann diese Änderungen des Schubes entsprechend den Missionsanforderungen korrigieren. Das Ablassen von Flüssigkeit aus der Gasentnahmevorrichtung ist ferner insofern unerwünscht, als der Treibstoff dann nicht mehr für das Haupttriebwerk des Raumfahrzeugs zur Verfügung steht.

Zur sicheren Trennung der Gas- und Flüssigkeitsphasen werden bisher in der Raumfahrt folgende Verfahren angewandt:
- Durch die Erwärmung des Treibstoffs wird die aus dem Treibstofftank austretende Flüssigkeit verdampft. Dieses verfahren erfordert einen hohen Energiebedarf zur Verdampfung der Flüssigkeit.
- Es wird eine zusätzliche Beschleunigung aufgebracht, die bewirkt, daß sich der Treibstoff zum Zeitpunkt der Druckentlastung nicht am Gasauslaß befindet. Dies erfordert eine gerichtete Beschleunigung mittels eines zusätzlichen Antriebssystems, was im allgemeinen relativ kostspielig ist. Zusätzlich ist eine Anpassung des Missionsprofils vor einer Druckentlastung notwendig.

Daneben ist aus der US 40 27 494 A die Verwendung von Phasenseparatoren zur Trennung der flüssigen von der gasförmigen Phase bekannt geworden, wobei in dieser bekannten Vorrichtung ein Phasenseparator für Betriebszustände mit geringer Beschleunigung zum Einsatz kommt und die Trennung unter Verwendung supraleitender Magnete erfolgt. Weiterhin beschreibt die US 48 48 987 A einen Phasenseparator, bei dem Pumpen und eine Reihe von Ventilen vorgesehen sind. Schließlich wird bei einem in der US 70 77 885 B2 beschriebenen Phasenseparator ein Propeller verwendet, der ein Flüssigkeits-Gasgemisch in Rotation versetzt und bei dem eine Membran aus Polyethylen oder Nylon die Flüssigkeit, in diesem Fall Wasser, abtrennt. Dieses letztere bekannte System ist für einen Einsatz zusammen mit Brennstoffzellen vorgesehen und eignet sich nicht zur Trennung kryogener Flüssigkeiten. Weitere, aus der US 44 35 196 A und der US 46 17 031 A bekannt gewordene Vorrichtungen sind auf einen Einsatz im Schwerefeld der Erde beschränkt.

Der Erfindung liegt die Aufgabe zugrunde, einen Tank der eingangs genannten Art derart auszubilden, daß eine sichere Phasentrennung sowohl für kryogene als auch für nicht kryogene Treibstoffe und Flüssigkeiten bei unterschiedlichsten Beschleunigungen, von geringen Beschleunigungen während ballistischer Flugphasen bis hin zu hohen Beschleunigungen während der Hauptschubphasen, wie sie in Raumfahrtsystemen auftreten, gewährleistet ist.

Die Erfindung löst diese Aufgabe durch die Merkmale von Patentanspruch 1, indem sie vorsieht, daß bei einem derartigen Tank die Gaszuführ- und Entnahmevorrichtung unmittelbar an der Tankschale im oberen Bereich des Tanks angeordnet und direkt mit dieser verbunden ist und aus einem im Wesentlichen zylinderförmigen Gehäuse besteht, das mit einer Reihe im oberen Bereich des Gehäuses umfangsseitig angeordneter, sich trompetenförmig erweiternder und durch Prallplatten abgedeckter Öffnungen sowie mit wenigstens einer weiteren im unteren Bereich des Gehäuses angeordneten sich trompetenförmig erweiternden und durch eine Prallplatte abgedeckte Öffnung versehen ist und das ein zu wenigstens einem Auslaß führendes Entnahmerohr aufweist, wobei jede der Öffnungen mit hintereinander wechselseitig angeordneten in die Öffnung ragenden Blechen versehen und über ein Doppelsieb mit dem Inneren des Gehäuses verbunden ist und wobei an der Innenwand des Gehäuses parallel zur Längsachse des Gehäuses verlaufende Bleche angeordnet sind, wobei die zur Abdeckung der unteren trompetenförtnigen Öffnung vorgesehene tellerförmige horizontale Prall-Platte ein oder mehrere Löcher aufweist.

Die sich zum Tank hin erweiternden und somit in etwa trompetenförmig ausgebildeten Öffnungen sind durch den Einbau von Kapillarblechen derart ausgebildet, daß das Eindringen von Flüssigkeiten weitestgehend verhindert wird. Dringt, zum Beispiel aufgrund größerer Flüssigkeitsbewegungen, Flüssigkeit in das Innere der Gaszuführ- und Entnahmevorrichtung ein, so wird diese Flüssigkeit mittels der Kapillarbleche in das Innere des Reservoirs abgeführt und dadurch vom Gas abgetrennt. Die bei dem erfindungsgemäßen Tank vorgesehene Gaszuführ- und Entnahmevorrichtung besitzt dabei den Vorteil, daß sie mit den Blechen ausschließlich aus passiven Komponenten besteht und unter anderem keine Ventile aufweist. Das gesamte System bedarf daher keiner zusätzlichen Steuerung, wie dies beispielsweise bei Systemen der Fall ist, die auf eine Vorbeschleunigung angewiesen sind oder die eine Phasentrennung durch Verdampfung des Treibstoffs herbeiführen. Der Tank nach der Erfindung zeichnet sich damit durch einen gegenüber aktiven Systemen wesentlich vereinfachten Aufbau, eine gesteigerte Robustheit und reduzierte Kosten aus und erlaubt die flüssigkeitsfreie Förderung von Gas während Phasen reduzierter Beschleunigung, d. h., ballistischer Phasen, ebenso wie in beschleunigten Flugphasen, wie sie bei Oberstufen und Transferfahrzeugen in der Raumfahrt auftreten.

Dadurch, daß bei dem erfindungsgemäßen Tank im unteren Bereich des Gehäuses der Gaszuführ- und Entnahmevorrichtung nur eine trompetenförmige Öffnung vorgesehen ist, wird ein besonders einfacher Aufbau und damit eine Optimierung hinsichtlich seiner Einbaubarkeit, des Gewichtes und einer späteren Wartung erreicht, wobei letzteres insbesondere bei wieder verwendbaren Raumfahrtsystemen ein wichtiger Aspekt ist, für den sich für diese der Tank nach der Erfindung in besonderer Weise eignet.

Ein weiterer Vorteil des erfindungsgemäßen Tanks liegt darin, daß er eine gute thermale Verbindung zwischen der Gaszuführ- und Entnahmevorrichtung und der Tankschale aufweist. Im Bereich des oberen Tankdomes, wo sich das Treibgas hauptsächlich befindet, ist die Temperatur gegenüber der Temperatur des kryogenen Flüssigtreibstoffs besonders hoch und die Tankschale heizt sich durch Wärmeleitung in den Tank besonders gut auf. Dadurch, daß gemäß der Erfindung die Gaszuführ- und Entnahmevorrichtung direkt mit dem oberen Tankdeckel verbunden ist, wirkt diese Anordnung zusätzlich als Wärmetauscher im Auslaßbereich der Tankschale und sorgt so zusätzlich für konstantere Temperaturbedingungen, insbesondere wenn sich das Druckgas im Tank während einer Druckentlastung schnell abkühlt. Dies wirkt sich unter anderem positiv auf Lageregelungssysteme aus, die mit dem Druckgas betrieben werden. Besonders stark ist dieser Effekt bei kryogenen Treibstoffen, bei denen die Gastemperatur mit dem Abstand zur Flüssigkeit im allgemeinen erheblich ansteigt.

Die erfindungsgemäß vorgesehene direkte Verbindung der Gaszuführ- und Entnahmevorrichtung mit dem Tankdeckel des Tanks hat weiterhin den Vorteil, daß sich auf diese Weise die Gaszuführ- und Entnahmevorrichtung auch zu einem sehr späten Zeitpunkt noch in den Tank einsetzen läßt. Notwendige Verifikationstests, z. B. Vibrationstests zum Nachweis der strukturellen Festigkeit, lassen sich so als Komponenten zusammen mit dem Tankdeckel durchführen, in dem lediglich der Tankdeckel eingespannt vibriert werden muß. Diese Tests auf Komponentenebene führen zu einer erheblichen Kosteneinsparung im Gegensatz zu Systemen, bei denen die strukturelle Integrität des gesamten Tanks verifiziert werden muß.

Nachfolgend soll die Erfindung anhand eines Ausführungsbeispiels näher erläutert werden. Es zeigt:
- Fig. 1: einen Schnitt durch den oberen Teil eines Oberstufentanks mit einer darin eingebauten Gaszuführ- und Entnahmevorrichtung,
- Fig. 2: Darstellungen der Lage der Flüssigkeit in einem Tank gemäß Fig. 1 während Phasen hoher Beschleunigung,
- Fig. 3: Darstellungen der Lage der Flüssigkeit in einem Tank gemäß Fig. 1 während Phasen geringer Beschleunigung,
- Fig. 4: einen Schnitt durch einen Tank in einem horizontal startenden und landenden Raumfahrzeug mit Darstellungen der Lage der Flüssigkeit in diesem Tank,
- Fig. 5: verschiedene Schnittdarstellungen einer Entnahmevorrichtung der Anordnung gemäß Fig. 1,
- Fig. 6: eine alternative Ausführungsform einer Entnahmevorrichtung,
- Fig. 7: eine Explosionsdarstellung eines Details der Anordnung gemäß Fig. 5,
- Fig. 8: eine Darstellung des Vorgangs einer mehrstufigen Flüssigkeitsabscheidung bei der entsprechend dem Schnitt C-C in Fig. 5 dargestellten Anordnung und
- Fig. 9: eine Darstellung des Flüssigkeitsaustreibens während beschleunigter Phasen bei der entsprechend dem Schnitt C-C in Fig. 5 dargestellten Anordnung.

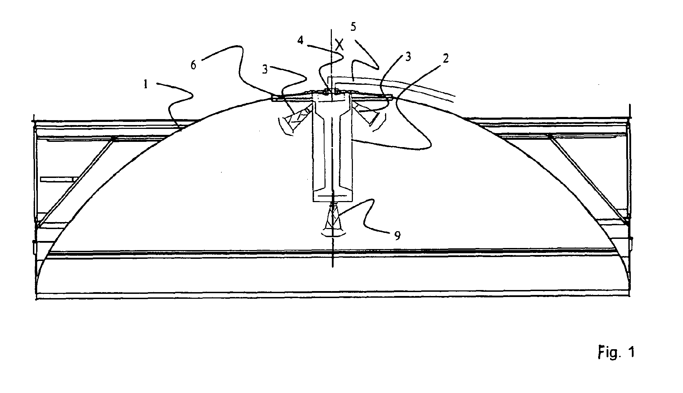

Bei der in Fig. 1 dargestellten Tankschale 1 handelt es sich um den oberen Bereich eines Treibstofftanks mit einer gekrümmten Form, wie sie üblicherweise in Raumfahrzeugen Anwendung findet. Im oberen Teil der Tankschale 1 befindet sich eine Gäszuführ- und Entnahmevorrichtung 2. Trompetenförmige Öffnungen 3 im oberen Bereich der Gaszuführ- und Entnahmevorrichtung 2, d. h. nahe an einem Tankdeckel 6 der Tankschale 1, stellen die Verbindung zwischen dem Inneren des Treibstofftanks und dem Inneren der Gaszuführ- und Entnahmevorrichtung 2 her. Eine Durchführung 4 verbindet die Vorrichtung 2 mit einem nur ansatzweise dargestellten Leitungssystem 5 außerhalb der Tanks. Die Durchführung erfolgt im Fall des hier dargestellten Ausführungsbeispiels durch den Tankdeckel 6, wobei diese Durchführung aber auch an einer beliebigen Stelle der Tankschale 1 unter Verwendung einer zusätzlichen Verbindungsleitung vorgesehen sein kann. Neben den trompetenförmigen Öffnungen 3, die sich am oberen Teil der Gaszuführ- und Entnahmevorrichtung 2, d. h. ganz oben im Treibstofftank, befinden, ist eine weitere Öffnung 9 im unteren Bereich der Gaszuführ- und Entnahmevorrichtung 2 vorgesehen.

Je nach den an den Tank gestellten speziellen Anforderungen kann die Anzahl der trompetenförmigen Öffnungen 3 im oberen Teil der Gaszuführ- und Entnahmevorrichtung 2 zwischen einer und, wie im Fall des hier beschriebenen Ausführungsbeispiels dargestellt, vier Öffnungen variieren. Die Lage der Öffnungen 3, 9 ist derart gewählt, daß während des überwiegenden Teiles der verschiedenen Missionsphasen mindestens eine trompetenförmige Öffnung 3 oder 9 nicht vollständig von Flüssigkeit 7 umgeben ist. Die Lage der Öffnungen 3 im Tank 1 kann dabei entsprechend dem Bedarf optimiert werden, wobei auch kurzzeitige Bedeckungen aller trompetenförmigen Öffnungen 3, 9 eintreten können. Während dieser Phasen füllt sich das Innere des Systems mit Flüssigkeit 7 während die verdrängte Gasmenge ausgetrieben wird.

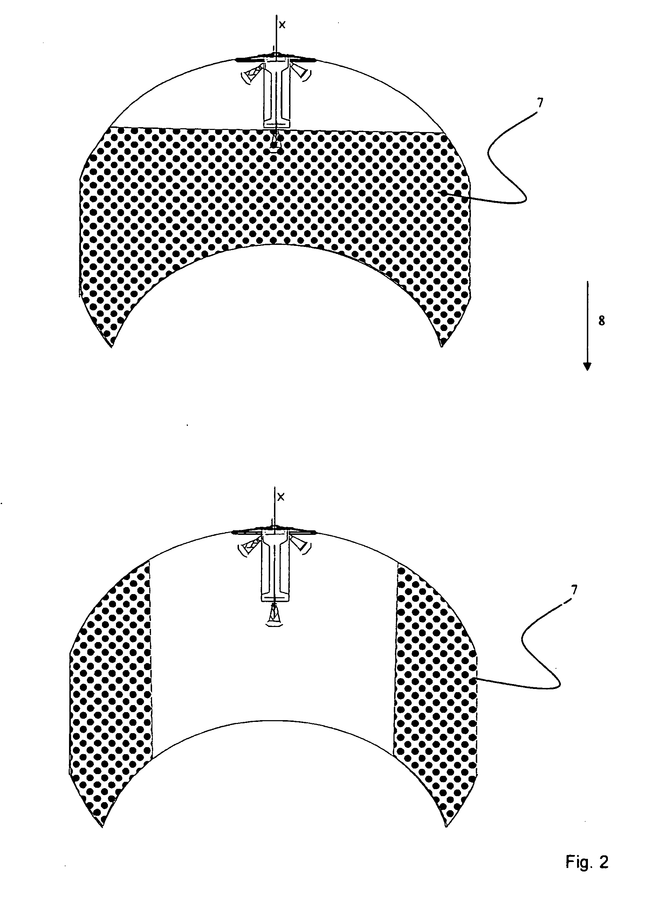

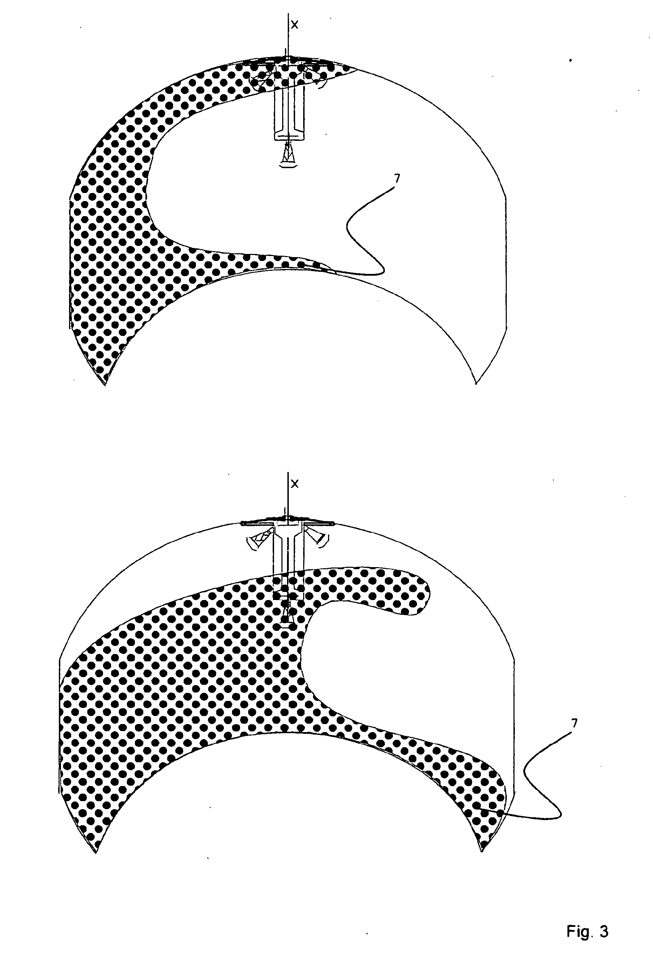

Die Orte im Tank, an denen sich die Flüssigkeit 7 während der unterschiedlichen Missionsphasen befinden kann, sind in den Figuren 2 und 3 dargestellt. Die Missionsphasen unterscheiden sich wie folgt:
- Phasen mit hoher Beschleunigung (Fig. 2): Diese Phasen beinhalten Missionsphasen, während derer das in den Figuren nicht dargestellte Haupttriebwerk gezündet hat und eine Beschleunigung in Richtung des Pfeiles 8 erzeugt. Die Flüssigkeit befindet sich dann, wie im oberen Teil der Fig. 2 dargestellt, im unteren Bereich des Tanks. Wird dagegen, wie im unteren Teil von Fig. 2 dargestellt, der Tank in Rotation versetzt, so lagert sich die Flüssigkeit im äußeren Randbereich des Tanks an und hat dann keine Verbindung zur Gaszuführ- und Entnahmevorrichtung 2.
- Anfänglich, d. h. zu Beginn der Mission am Boden, ist der Tank und damit auch die Gaszuführ- und Entnahmevorrichtung 2 weitestgehend mit Flüssigkeit 7 gefüllt. Während der ersten Hauptzündung leert sich das Reservoir. Die Phase der Treibstoffentnahme bewirkt, daß die fehlende Flüssigkeit durch Gas ersetzt wird, indem Gas durch die Vorrichtung in den Tank eingebracht wird. Das Reservoir ist so dimensioniert, daß die untere Öffnung 9 keine Verbindung mehr mit der Flüssigkeit hat, sobald die erste Zündung beendet ist. Das System ist dann weitestgehend frei von Flüssigkeit.
- Ballistische Flugphasen mit geringer Beschleunigung, zum Beispiel während des Aussetzens eines Satelliten (Fig. 3): Die Flüssigkeit befindet sich dann in einer chaotischen Bewegung im Tank und kann sporadisch die trompetenförmigen Öffnungen 3 und 9 benetzen.

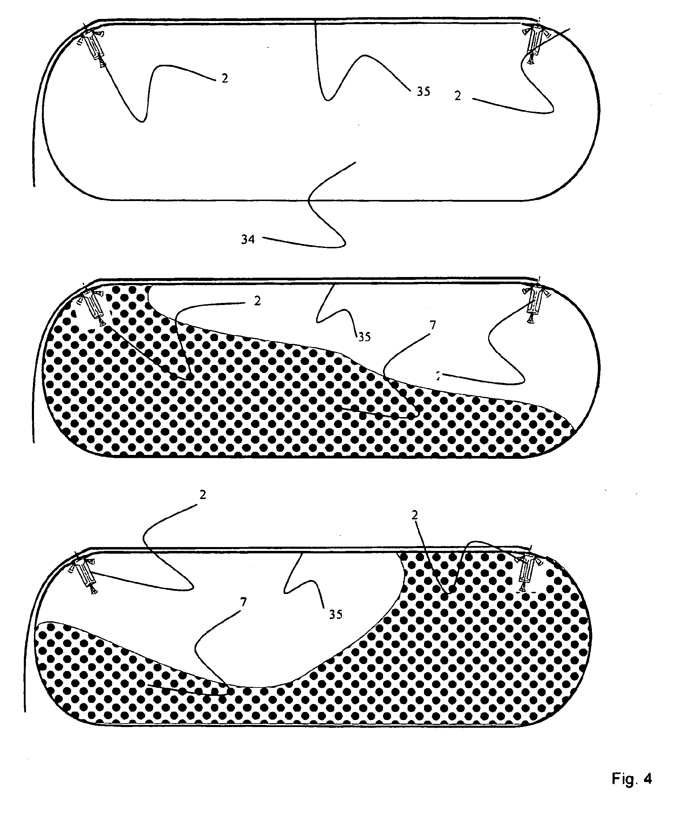

Je nach der geplanten Mission lassen sich auch mehrere Gaszuführ- und Entnahmevorrichtung in einen Tank integrieren. Im oberen Teil von Fig. 4 ist dies am Beispiel eines Tanks 34 für ein horizontal startendes und landendes Raumfahrzeug dargestellt, wobei in dieser Figur identische Bauteile mit den gleichen Bezugszeichen wie bei den vorangehenden Figuren bezeichnet sind. Die Flüssigkeit kann sich dann, wie in der Mitte und im unteren Teil der Fig. 4 dargestellt, während der Phase am Boden und während des Fluges in verschiedenen Bereichen im Tank 34 befinden, wobei die Gaszuführ- und Entnahmevorrichtungen entsprechend dem Missionsprofil verteilt sind. Im Fall des hier dargestellten Ausführungsbeispiels sind zwei Gaszuführ- und Entnahmevorrichtungen 2 durch eine Leitung 35 so miteinander verbunden, daß Gas durch eine beliebige Entnahmevorrichtung 2 abgesaugt und einem in der Figur nicht dargestellten Verbraucher zugeführt werden kann. Dabei ist die Anzahl der verbundenen Gaszuführ- und Entnahmevorrichtungen 2 im Prinzip beliebig.

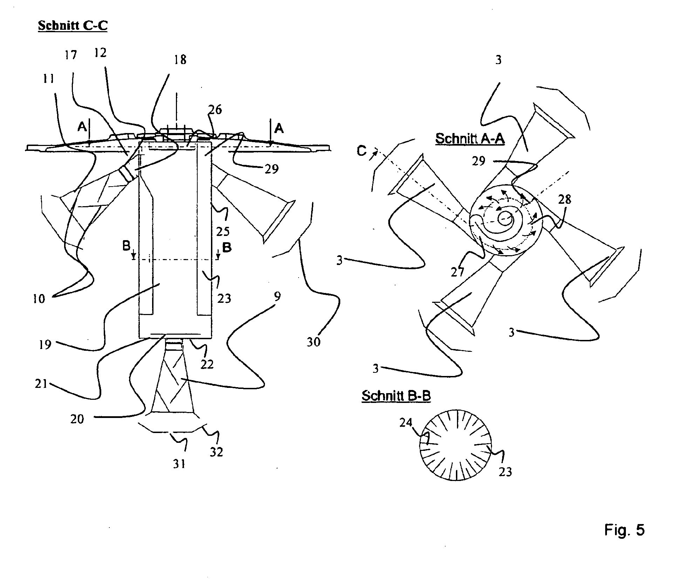

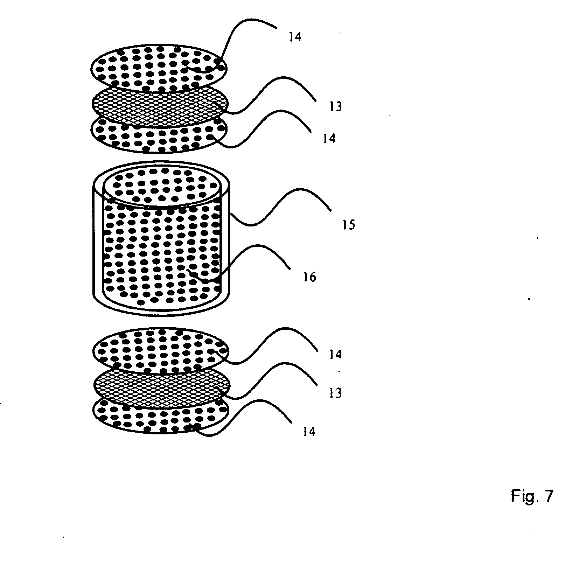

Jede Gaszuführ- und Entnahmevorrichtung 2 der vorangehenden Figuren weist den in Fig. 5 dargestellten mehrstufigen Aufbau mit einem Gehäuse 25 und daran angeordneten trompetenförmigen Öffnungen 3 und 9 auf. Innerhalb der trompetenförmigen Öffnungen 3 und 9 befinden sich, abgedeckt durch eine tellerförmige Abdeckung 30, 32, eine Reihe von Blechen 10, die nacheinander so angeordnet sind, daß sie mit den trompetenförmigen Öffnungen 3 und 9 einen spitzen Winkel bilden. Die Flüssigkeit 7 lagert sich, kapillar getrieben, verstärkt in Ecken 11 an, die die Bleche 10 mit den trompetenförmigen Öffnungen 3 und 9 bilden. Den Trompetenhals bildet jeweils eine Doppelsiebhülse 12, deren Aufbau im Detail in Fig. 7 dargestellt ist. Dabei werden zwei Siebe 13 jeweils von zwei Lochplatten 14 begrenzt. Ferner befinden sich zwei Hülsen 15 und 16, von denen die innere Hülse 16 mit Löchern versehen ist, zwischen der Kombination aus Sieben 13 und Lochplatten 14. Dringt Flüssigkeit in den Trompetenhals ein, so führt die Benetzung der Bereiche zwischen den Sieben 13 und den Lochplatten 14 bzw. zwischen der Hülse 15 und der Lochhülse 16 zu einer vollständigen Benetzung der Festkörperstrukturen und dem Einschluß einer Gasblase im Innenbereich der Doppelsiebhülse 12.

Das Eindringen von Flüssigkeit wird durch den sogenannten Bubblepoint-Druck der beiden Siebe 13 reduziert. Dieses ist derjenige Druck, den eine Strömung aufbringen muß, um die Gasblase aus dem Innenbereich der Doppelsiebhülse 12 zu entfernen. Das Eindringen größerer Mengen von Flüssigkeit wird dadurch effektiv minimiert. Der notwendige Bubblepoint-Druck hängt dabei von der Strömungsgeschwindigkeit des Flüssigkeits-Gasgemisches ab.

Hinter der Doppelsiebhülse 12 befindet sich eine Benetzungssperre 17, die aus einer Schweißkante oder, alternativ, aus einer vertikal zur Trompetenhals-Rohrwand 18 abstehenden Ringscheibe bestehen kann.

Die trompetenförmigen Öffnungen 3 und 9 münden in einen, im Fall des hier dargestellten Ausführungsbeispiels zylinderförmig ausgeführten Innenbereich 19 des Gehäuses 25, der die eindringende Restmenge an Flüssigkeit auffängt. Alternativ kann zur Vergrößerung des Volumens der Innenbereich 19 auch andere geometrische Formen bzw. einen variablen Durchmesser aufweisen, zum Beispiel eine kugelförmigen Innenbereich oder auch eine quadratische Rundform anstatt einer Zylinderform. Im unteren Bereich des Innenbereiches 19 befindet sich eine Platte 20, die einen Spalt 21 mit der Unterseite 22 des Innenbereiches 19 bildet.

Der Innenbereich 19 ist mit einer Reihe von Kapillarblechen 23 und 24 versehen, die die durch die trompetenförmigen Öffnungen 3 und 9 eindringende Restmenge an Flüssigkeit in den Reservoirbereich, d. h., den Innenbereich 19, abführen. Die Kapillarbleche 23 und 24 sind in der Nähe der trompetenförmigen Öffnungen 3 nur schmal ausgebildet, damit sich dort keine großen Flüssigkeitsmengen ansammeln können. Um weiterhin zu verhindern, daß sich größeren Mengen Flüssigkeit in der Nähe der trompetenförmigen Öffnung 9 befinden, enden die Kapillarbleche vor dem Boden des Innenbereiches bzw. sind nur schmal bis zur Unterseite 22 weitergeführt, um Flüssigkeit, die sich in der Nähe des Bodens 22 ansammelt, in die Kapillarbleche 23 und 24 abzuführen Die Kapillarbleche 23 und 24 sind an der Innenfläche des Gehäuses 25 angebracht. Zur Optimierung des kapillaren Füllverhaltens sind diese Bleche 23 und 24 abwechselnd kürzer und länger ausgebildet

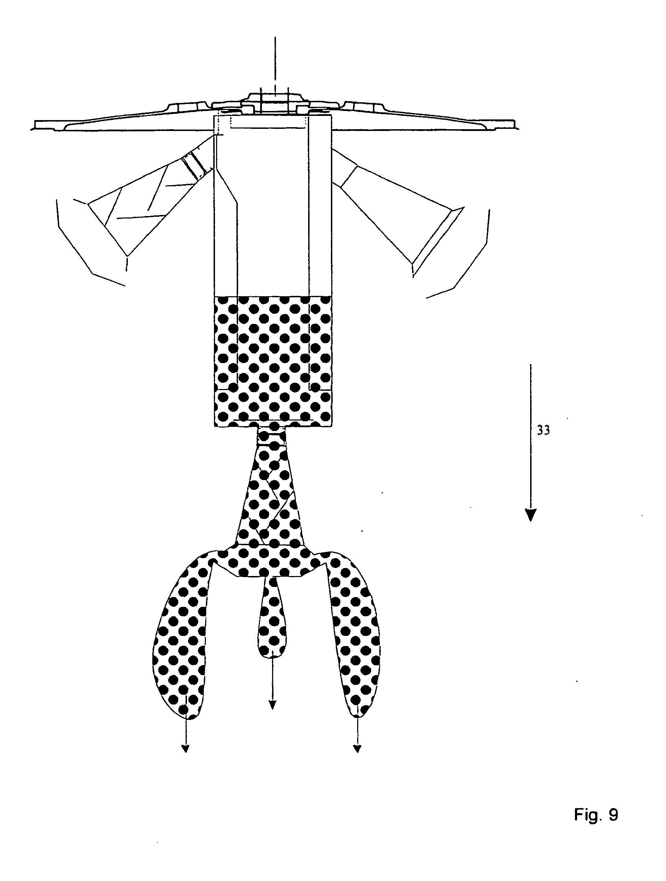

Der zentrale Bereich des Gehäuses 25 ist frei von Kapillarblechen 24, so daß sich in diesem Bereich bevorzugt Gas befindet. Am oberen Ende 26 der Be- und Entnahmevorrichtung 2 befindet sich eine weitere schneckenförmige Separationskammer 27, wie aus dem Schnitt A-A in Fig. 9 hervorgeht. Die Separationskammer 27 ist derart ausgeführt, daß ein Siebelement 28 schneckenförmig angebracht ist. Diese Krümmung bewirkt, daß sich die im Gas befindliche Restflüssigkeit am Siebelement 28 anlagert. Ein Kapillarblech 29 der hier sternförmig angeordneten Kapillarbleche 24 ist dabei soweit verlängert, daß die Restflüssigkeit, die aus der Separationskammer 27 ausgetrieben wird, wieder dem Reservoirbereich 19 zugeführt wird. Die Separation der Phasen erfolgt daher weitestgehend kapillargetrieben.

Die Entnahmevorrichtung 2 ist fest mit dem Tankdeckel 6 verbunden, so daß sich ein guter Thermalkontakt bildet. Der zumindest bei Tanks, die mit kryogenen Flüssigkeiten betrieben werden, relativ zur Flüssigkeit 7 warme Tankdeckel 6 führt dazu, daß die Entnahmevorrichtung eine zur Flüssigkeit 7 relativ hohe Temperatur besitzt. Die Entnahmevorrichtung wirkt dann wie ein passiver Wärmetauscher und sorgt für gleichmäßigere Temperaturen des ausströmenden Druckgases.

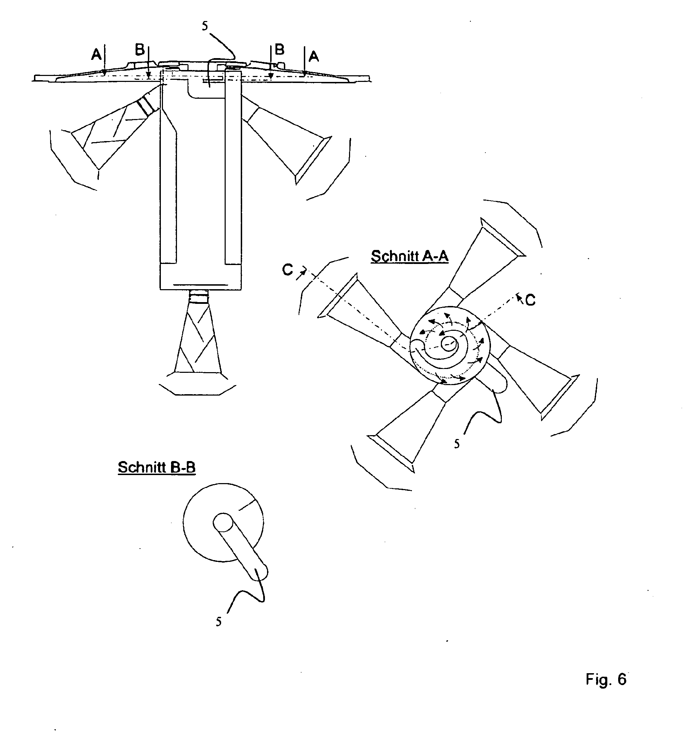

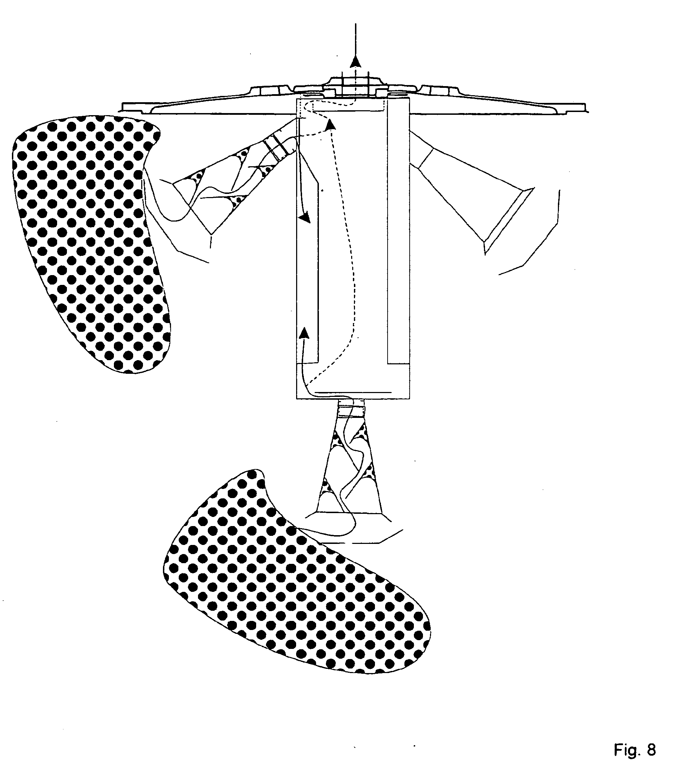

Das Be- und Entnahmerohr 5 führt das separierte Gas aus der Gaszuführ- bzw. Entnahmevorrichtung und damit aus dem Treibstofftank ab. Der obere Teil des Innenbereiches 26 kann dabei auch so ausgeführt werden, daß wie in Fig. 6 dargestellt das Be- und Entnahmerohr seitlich aus dem als Zentrifuge wirkenden Siebelement 28 austritt und durch den Tank nach unten geführt wird. Das Rohr 5 kann dabei alternativ zu der in Fig. 5 dargestellten Ausführungsform auch seitlich aus dem Innenbereich 19 führen. In Fig. 8 sind die Strömung im Falle der Belastung einer der trompetenförmigen Öffnungen durch Flüssigkeit und die Separation der Flüssigkeit vom Gas am Beispiel einer der trompetenförmigen Öffnungen 3 und der trompetenförmigen Öffnung 9 schematisch dargestellt.

Die Anordnung ermöglicht so lange eine sichere Phasentrennung, bis der Bereich der Kapillarbleche 23 des Reservoirbereiches 25 vollständig mit Flüssigkeit gefüllt ist. Die Größe des Reservoirs 25 ist daher so dimensioniert, daß sie für eine ballistische Phase ausreichend ist. Eine Entleerung des Reservoirs 25 über die untere trompetenförmige Öffnung 9 ist durch das Aufbringen einer Beschleunigung möglich. Dabei ist die untere tellerförmige Abdeckung 32 so ausgeführt, daß sie ein oder mehrere Löcher 31 aufweist. Dadurch wird verhindert, daß sich Flüssigkeit in der tellerförmigen Abdeckung 32 während der Entleerung ansammeln kann. Das Entleeren des Systems durch die untere trompetenförmige Öffnung 9 ist abschließend in Fig. 9 schematisch dargestellt. Der Pfeil 33 beschreibt dabei die Richtung der Beschleunigung.

## Patentansprüche

1. Tank zur Lagerung kryogener Flüssigkeiten oder lagerfähiger flüssiger Treibstoffe zum Betrieb von Raumflugkörpern, mit einem als Fördermedium dienenden Treibgas sowie mit wenigstens einer Gaszuführ- und Entnahmevorrichtung in Form eines eine Tankschale aufweisendes wiederfüllbaren Reservoirs, bei der mittels Sieben unter Ausnutzung der Oberflächenspannung eine Separation des Treibgases von der Flüssigkeit herbeigeführt ist, **dadurch gekennzeichnet, daß** die Gaszuführ- und Entnahmevorrichtung (2) unmittelbar an der Tankschale (1) im oberen Bereich des Tanks angeordnet und direkt mit dieser verbunden ist und aus einem im Wesentlichen zylinderförmigen Gehäuse (25) besteht, das mit einer Reihe im oberen Bereich des Gehäuses (25) umfangsseitig angeordneter, sich trompetenförmig erweiternder und durch Prallplatten (30) abgedeckter Öffnungen (3) sowie mit wenigstens einer weiteren im unteren Bereich des Gehäuses (25) angeordneten sich trompetenförmig erweiternden und durch eine Prallplatte (32) abgedeckte Öffnung (9) versehen ist und das ein zu wenigstens einem Auslaß führendes Entnahmerohr (29) aufweist, wobei jede der Öffnungen (3, 9) mit hintereinander wechselseitig angeordneten in die Öffnung (3, 9) ragenden Blechen (14) versehen und über ein Doppelsieb (12) mit dem Inneren des Gehäuses (25) verbunden ist und wobei an der Innenwand des Gehäuses (25) parallel zur Längsachse des Gehäuses (25) verlaufende Bleche (24) angeordnet sind, wobei die zur Abdeckung der unteren trompetenförmigen Öffnung (9) vorgesehene tellerförmige horizontale Prall-Platte (32) ein oder mehrere Löcher (31) aufweist.

2. Tank nach Anspruch 1, **dadurch gekennzeichnet, daß** er zur Aufnahme kryogener Flüssigkeiten, wie flüssigem Wasserstoff oder flüssigem Sauerstoff, ausgebildet ist.

3. Tank nach einem der Ansprüche 1 oder 2, **dadurch gekennzeichnet, daß** er zur Aufnahme lagerfähiger Treibstoffe, wie Monomethylhydrazin (MMH) oder Hydrazin (N₂H₄), ausgebildet ist.

4. Tank nach einem der Ansprüche 1 oder 2, **dadurch gekennzeichnet, daß** er zur Aufnahme eines Oxidators wie Distickstofftetroxid (N₂O₄), ausgebildet ist.

## Claims

1. Tank for storing cryogenic liquids or storable liquid fuels for the operation of space vehicles, with a propellant gas serving as conveying medium and also with at least one gas-supply-and-extraction device in the form of a refillable reservoir exhibiting a tank shell, in which a separation of the propellant gas from the liquid is brought about by means of screening by exploiting the surface tension, **characterised in that** the gas-supply-and-extraction device (2) is arranged immediately on the tank shell (1) in the upper region of the tank and is directly connected to said tank shell and consists of a substantially cylindrical housing (25) which is provided with a series of openings (3) arranged peripherally in the upper region of the housing (25), widening in the shape of a trumpet and covered up by baffles (30), and also with at least one further opening (9) arranged in the lower region of the housing (25), widening in the shape of a trumpet and covered up by a baffle (32), and which exhibits an extraction pipe (29) leading to at least one outlet, each of the openings (3, 9) being provided with metal sheets (14) arranged in succession in alternating manner and protruding into the openings (3, 9), and being connected to the interior of the housing (25) via a twin screen (12), and metal sheets (24) being arranged along the inner wall of the housing (25) extending parallel to the longitudinal axis of the housing (25), the plate-shaped horizontal baffle (32) provided for the purpose of covering up the lower trumpet-shaped opening (9) exhibiting one or more holes (31).

2. Tank according to Claim 1, **characterised in that** it is designed for receiving cryogenic liquids such as liquid hydrogen or liquid oxygen.

3. Tank according to one of Claims 1 or 2, **characterised in that** it is designed for receiving storable fuels such as monomethylhydrazine (MMH) or hydrazine (N₂H₄).

4. Tank according to one of Claims 1 or 2, **characterised in that** it is designed for receiving an oxidiser such as dinitrogen tetroxide (N₂O₄).

## Revendications

1. Réservoir pour le stockage de liquides cryogéniques ou de carburants liquides, aptes à être stockés, pour le fonctionnement d'engins spatiaux, avec des gaz propulseurs, qui servent d'agent propulseur, ainsi qu'avec au moins un dispositif d'amenée et de prélèvement du gaz, sous la forme d'un réservoir réutilisable, présentant un dôme, dans lequel le gaz propulseur est séparé du liquide au moyen de tamis, en mettant à profit la tension superficielle, **caractérisé en ce que** le dispositif d'amenée et de prélèvement de gaz (2) est disposé directement sur le dôme (1) du réservoir, dans la zone supérieure du réservoir et est relié directement à celle-ci, et consiste en un carter (25) de forme sensiblement cylindrique, qui est pourvu d'une série d'ouvertures (3), qui, disposées, en agencement périphérique, dans la zone supérieure du carter (25), s'élargissent en forme de trompette et sont recouvertes par des plaques déflectrices (30), ainsi qu'avec au moins une autre ouverture (9), qui, disposée dans la zone inférieure du carter (25), s'élargit en forme de trompette et est recouverte d'une plaque déflectrice (32), et qui présente un tube de prélèvement (29), qui conduit à au moins une sortie, sachant que chacune des ouvertures (3, 9) est pourvue de tôles (14), disposées en alternance, les unes derrière les autres, en faisant saillie dans l'ouverture (3, 9), et est raccordée à l'intérieur du carter (25) par l'intermédiaire d'un double tamis (12), et des tôles (24), qui s'étendent parallèlement à l'axe longitudinal du carter (25), étant disposées sur la paroi intérieure du carter (25), la plaque déflectrice (32) horizontale, en forme de plateau, prévue pour le recouvrement de l'ouverture inférieure (9) en forme de trompette, présentant un ou plusieurs trous (31).

2. Réservoir selon la revendication 1, **caractérisé en ce qu'**il est conçu pour recevoir des liquides cryogéniques, tels que l'hydrogène liquéfié ou l'oxygène liquéfié.

3. Réservoir selon l'une des revendications 1 ou 2, **caractérisé en ce qu'**il est conçu pour recevoir des carburants aptes à être stockés, tels que la monométhylhydrazine (MMH) ou l'hydrazine (N₂H₄).

4. Réservoir selon l'une des revendications 1 ou 2, **caractérisé en ce qu'**il est conçu pour recevoir un oxydant, tel que le tétroxyde d'azote.
